# EUROPÄISCHE PATENTSCHRIFT

(11) **EP 3 184 284 B1**
(45) Veröffentlichungstag und Bekanntmachung des Hinweises auf die Patenterteilung: **01.04.2020**
(21) Anmeldenummer: 16204811.0
(22) Anmeldetag: 16.12.2016
(51) Int. Cl.: B29C 65/48, B29C 65/82, G01M 3/32, G01N 3/12, G01N 19/04, G01N 19/08, B64C 1/12, B64C 3/26, B64D 45/00, B29C 65/52

(54) **BAUTEILVORRICHTUNG UND VERFAHREN ZUM DETEKTIEREN EINES SCHADENS EINER VERKLEBUNG BEI EINER BAUTEILVORRICHTUNG**
COMPONENT DEVICE AND METHOD FOR DETECTING DAMAGE TO AN ADHESIVE BOND IN A COMPONENT DEVICE
COMPOSANT ET PROCÉDÉ DE DÉTECTION D'UN DOMMAGE AU NIVEAU D'UNE LIAISON COLLÉE DU COMPOSANT

(30) Priorität: 22.12.2015 DE 102015122594
(43) Veröffentlichungstag der Anmeldung: 28.06.2017
(73) Patentinhaber: Airbus Defence and Space GmbH, 82024 Taufkirchen (DE)
(72) Erfinder: KRUSE, Thomas, 21129 Hamburg (DE); KÖRWIEN, Thomas, 85635 Höhenkirchen (DE); FRIEDBERGER, Alois, 85667 Oberpframmern (DE); HELWIG, Andreas, 80469 München (DE)
(74) Vertreter: LKGLOBAL Lorenz & Kopf PartG mbB Patentanwälte

(56) Entgegenhaltungen:
- DE-A1- 1 934 798
- DE-A1- 3 201 515
- DE-U1- 20 213 973
- JP-A- H10 286 885
- JP-A- 2000 186 973
- US-A- 4 205 551

## Beschreibung

Die vorliegende Erfindung betrifft eine Bauteilvorrichtung, insbesondere für ein primäres Stützbauteil eines Luftfahrzeugs. Die Bauteilvorrichtung umfasst ein erstes Bauteilelement, ein zweites Bauteilelement und eine Verklebung, welche eine Verbindung zwischen dem ersten Bauteilelement und dem zweiten Bauteilelement bereitstellt. Die vorliegende Erfindung betrifft ferner ein Verfahren, welches den Schritt umfasst: Bereitstellen der Bauteilvorrichtung, welche zwei durch die Verklebung verbundene Bauteilelemente und einen zu der Verklebung in Fluidverbindung stehenden Innenraum, welcher wenigstens für eine Art von Gas hermetisch abgeschlossen ist, aufweist.

Adhäsive Bindungen für Composite-Bauteile sind gegenwärtig nicht zertifiziert für die Verwendung als alleiniges Füge-Element in primären Stützbauteilen eines Luftfahrzeugs. Der Hauptgrund dafür ist, dass die adhäsive Bindung stark von Herstellungsparametern wie Verunreinigungen oder Oberflächenpräparation abhängen. All diese Einflussparameter können zu einer geschwächten Bindung oder zur Entbinderung der adhäsiven Bindung führen. Um dies zu vermeiden, wird momentan versucht, die Ausbreitung von Rissen zu verhindern. Alternativ wird versucht, das Wachstum der Risse zu verringern.

Da sekundäre adhäsive Bindungen in Composite-Bauteilen für primäre Stützbauteile verwendet werden sollen, ist es günstig, wenn potentielle Schäden (Entbinderung) innerhalb von wenigen Flugzyklen oder im Zuge von regulären Wartungsarbeiten von Personen ohne spezielle Kenntnisse aufgefunden werden können. In allen Überwachungen des Zustands von Strukturen (structural health monitoring) ist es bislang notwendig, Sensoren in den verschiedenen Verbindungen vorzusehen. Dies führt zu komplizierten Architekturen, so dass die Vorteile von Composite-Verbindungen, nämlich deren Leichtgewichtigkeit, Kostengünstigkeit und Dauerhaftigkeit, verringert werden.

Beispielsweise offenbart EP 2 431 156 A1 die Verwendung von magnetostriktiven Teilchen in der zu überwachenden Verbindung, wobei durch Schäden in der Verbindung verursachte Spannungen in den magnetostriktiven Teilchen durch einen externen Sensor detektiert werden können.

WO 2012/141779 A1 offenbart eine Verbindung, in der ein Gewebe und elektrisches Netzwerk mit Sensoren eingearbeitet sind, welche zur Überwachung des Zustands der Verbindung dienen.

Die US 420 5551 A beschreibt einen Apparat zur Prüfung der Stärke einer Dichtung. Hierfür wird die die Verbindung mit Druck beaufschlagt und die Entweichung des Mediums überwacht.

In der DE 1934798 A1 wird ein Verfahren und eine Vorrichtung zum Verpacken von Gegenständen und zum Prüfen dieser Verpackungen auf Dichtheit offenbart.

Die JP 2000 186973 A offenbart eine Methode zum Überprüfen eines Überlappstoßes. Hierfür wird ebenfalls die Verbindung mit Hochdruck beaufschlagt und die entweichende Luft als Kenngröße für die Qualität der Verbindung herangezogen.

In der JP H1 0286 885 A wird eine Methode offenbart, die dem Zweck dient die mögliche zu überprüfende Länge einer Verbindung zu erhöhen. Druck wird in dieser Methode ebenfalls als Indikator der Verbindungsgüte herangezogen.

Die DE 3201515 A1 befasst sich mit einem Verfahren und einer Vorrichtung zum Prüfen von Schweißnähten geschweißter Bauteile aus thermoplastischem Kunststoff, insbesondere geschweißter Kunststoffrohre und Kunststoffbehälter.

In der DE 2021 3973 U1 wird ein Anschlussabschnitt eines Kunststoffrohres oder Behälters aus einem thermoplastischen Kunststoff, insbesondere eines aus einem Band aus einem thermoplastischen Kunststoff hergestellten Kunststoff hergestellten Wickelrohres, offenbart.

Es ist Aufgabe der vorliegenden Erfindung, eine vereinfachte Zustandsüberwachung für adhäsive Verbindungen bereitzustellen.

Die Aufgabe wird durch die Bauteilvorrichtung nach Anspruch 1, durch das Verfahren nach Anspruch 7 sowie durch das Verfahren nach Anspruch 11 gelöst. Die abhängigen Ansprüche beschreiben bevorzugt die Ausführungsformen der Erfindung.

Die Erfindung betrifft eine Bauteilvorrichtung, insbesondere für ein primäres Stützbauteil eines Luftfahrzeugs. Die Bauteilvorrichtung umfasst ein erstes Bauteilelement, ein zweites Bauteilelement, eine Verklebung und eine Detektoreinrichtung. Die Verklebung stellt eine Verbindung zwischen dem ersten Bauteilelement und dem zweiten Bauteilelement bereit. Die Detektoreinrichtung weist wenigstens eine Innenraumsensoreinrichtung auf, welche ausgebildet ist, eine Änderung des Drucks und/oder einer Konzentration eines die Innenraumsensoreinrichtung umgebenden Gases zu messen. Das erste Bauteilelement, das zweite Bauteilelement und die Verklebung begrenzen einen Innenraum, wobei die Innenraumsensoreinrichtung in dem Innenraum angeordnet ist.

Die Bauteilvorrichtung ist insbesondere ein geklebter Verbund von zwei Bauteilen oder Bauteilelementen. Die Bauteilvorrichtung kann neben dem ersten Bauteilelement und dem zweiten Bauteilelement noch weitere Bauteilelemente aufweisen, die in einer zweiten, dritten oder weiteren Verklebung miteinander verbunden sind.

Das erste Bauteilelement weist vorzugsweise eine erste Kontaktfläche auf, während das zweite Bauteilelement insbesondere eine zweite Kontaktfläche aufweist. Die Verklebung ist bevorzugt zwischen der ersten Kontaktfläche und der zweiten Kontaktfläche vorgesehen. Die Verklebung stellt bevorzugt eine (sekundäre) adhäsive Verbindung zwischen den Bauteilen her. Die Verklebung kann auch als "bonding" bezeichnet werden und umfasst die aus dem Stand der Technik bekannten Materialien. Die Verklebung steht insbesondere an einer ihrer Außenflächen, vorzugsweise eine Seitenfläche, mit der Umgebungsluft in Fluidverbindung. Bevorzugt ist die Umgebungsluft direkt mit der Verklebung in Kontakt. Die Verklebung ist beispielsweise derart angeordnet, dass ein erster Seitenrand der Verklebung mit dem Innenraum und/oder ein zweiter Seitenrand mit der Umgebung der Bauteilvorrichtung in Fluidverbindung steht.

Das erste Bauteilelement ist insbesondere ein Stringer oder Pfette, welche ein Winkelprofil zur zusätzlichen, örtlich begrenzten Aussteifung von Rumpfblechfedern darstellen kann, wobei das Winkelprofil bevorzugt zur Bildung des Innenraums beiträgt. Das zweite Bauteilelement ist insbesondere ein Teil einer Außenhaut des Luftfahrzeugs.

Bevorzugt ist das erste Bauteilelement ein Omega-Stringer, welcher einen ersten Randbereich und einen zweiten Randbereich aufweist, welche in einer Ebene angeordnet sind. Der erste Randbereich und der zweite Randbereich sind mit einem brückenförmigen Mittenbereich verbunden, so dass ein Halbraum von dem ersten Randbereich, dem Mittenbereich und dem zweiten Randbereich begrenzt wird. Dieser Halbraum wird insbesondere von dem zweiten Bauteilelement begrenzt, so dass durch das erste Bauteilelement und das zweite Bauteilelement ein Innenraum begrenzt wird. Vorzugsweise ist auf der gleichen Seite wie der Halbraum an dem ersten Randbereich die erste Kontaktfläche und/oder an dem zweiten Randbereich die zweite Kontaktfläche vorgesehen, an welcher die Verklebung angeordnet ist. Über die Verklebung ist das erste Bauteilelement mit dem zweiten Bauteilelement adhäsiv befestigt. Das zweite Bauteilelement ist insbesondere in Form einer Platte ausgebildet.

Das erste Bauteilelement, das zweite Bauteilelement und die Verklebung sind insbesondere aus einem gasdichten Material hergestellt, so dass der Innenraum hermetisch von einer die Bauteilvorrichtung umgebenden Umgebung abgetrennt ist. Dazu weist das erste Bauteilelement und/oder das zweite Bauteilelement an den Stirnseiten der Bauteilvorrichtung eine Verschlussvorrichtung auf, welche den Innenraum der Bauteilvorrichtung hermetisch oder gasdicht von der Umgebung abtrennt. Alternativ kann das erste Bauteilelement und das zweite Bauteilelement ringförmig ausgebildet sein, so dass keine Stirnflächen vorhanden sind.

Folgende Materialkombinationen können für das erste Bauteilelement und das zweite Bauteilelement vorgesehen sein:
- ein ausgehärtetes Composite-Bauteil mit einem anderen ausgehärteten Composite-Bauteil,
- ein ausgehärtetes Composite-Bauteil mit einem unausgehärteten Composite-Bauteil (mit oder ohne zusätzlicher Verklebung, wobei die Verklebung durch das Härten des bislang unausgehärteten Composite-Bauteils zustande kommt),
- ein gehärtetes Composite-Bauteil mit einem metallischen Bauteil,
- ein gehärtetes Composite-Bauteil mit einem Fasermetalllaminatbauteil (fiber metal laminate part),
- ein gehärtetes Composite-Bauteil mit einem teilweise gehärteten Composite-Bauteil (mit oder ohne zusätzlicher Verklebung),
- ein teilweise gehärtetes Composite-Bauteil mit einem anderen teilweise gehärteten Composite-Bauteil (mit oder ohne zusätzlicher Verklebung) und
- jede Materialkombination, bei der wenigstens ein Bauteil ein Harz, vorzugsweise ein Cyanatesterharz, umfasst.

Das erste Bauteil und das zweite Bauteil, insbesondere die erste Kontaktfläche und die zweite Kontaktfläche, werden vorzugsweise zur Aufbringung der Verklebung nach einem der folgenden Prinzipien vorbehandelt:
- globale Applikation eines chemikalischen Ätzbades
- lokale Applikation durch Sprayen
- lokale Applikation durch Vakuumaufbringung
- lokale Applikation auf dem Trägermaterial (inklusive Schutz gegen Verschmutzungen beim Transport)
- lokale Applikation durch einen Beschichtungsprozess durch eine Bürste und
- jedes andere definierte Standardapplikationsverfahren für Flüssigkeiten.

Vorzugsweise ist zur Behandlung der Kontaktflächen eine Oberflächenbehandlung vorgesehen. Vorzugsweise werden die Kontaktflächen einer Laserbehandlung und/oder einer Plasmabehandlung unterzogen.

Die Verklebung vom ersten Bauteil und zweiten Bauteil kann manuell oder in einem automatisierten Prozess erfolgen. Die Aktivierung der Oberflächenbehandlung ist vorzugsweise ein Jahr stabil, was dem Hersteller die Möglichkeit gibt, das Herstellen von Bindungen oder Werkzeugkonzepte bereitzustellen, mit denen ein wiederholbarer Verbindungsprozess ohne Zeitbehinderungen möglich ist.

Die Innenraumsensoreinrichtung ist im Innenraum vorgesehen, um den Druck und/oder die Konzentration des in dem Innenraum vorhandenen Gases zu messen. Insbesondere ist die Detektoreinrichtung, vorzugsweise die Innenraumsensoreinrichtung, mit einer Steuerungseinrichtung verbunden, mittels welcher die von der Detektoreinrichtung bestimmten Messwerte weiter verarbeitet werden können. Die Verbindung zwischen der Detektoreinrichtung und der Steuerungseinrichtung kann drahtlos oder mit Hilfe von verlegten Leitungen erfolgen.

Vorzugsweise umfasst die Steuerungseinrichtung einen Mikroprozessor oder ist mit einem Computersystem, insbesondere des Luftfahrzeugs, verbunden. Die Steuerungseinrichtung ist insbesondere ausgebildet, eine Mitteilung oder einen Alarm auszugeben, wenn die Detektoreinrichtung detektiert, dass das Druck und/oder die Konzentration des in dem Innenraum vorhandenen Gases sich um einen gewissen, vorgegebenen Betrag ändert.

Die Innenraumsensoreinrichtung ist vorzugsweise an dem ersten Bauteilelement und/oder an dem zweiten Bauteilelement befestigt. Die Innenraumsensoreinrichtung weist insbesondere einen Gassensor auf, beispielsweise ein Sensor auf Basis eines halbleitenden Metalloxid, welcher die Konzentration eines Gases in dem Innenraum festlegen kann. Darüber hinaus kann die Innenraumsensoreinrichtung auch als Drucksensor ausgebildet sein, welcher den Gasdruck im Innenraum bestimmen kann.

Im Falle eines Schadens in der Verklebung findet ein Gasaustausch zwischen dem Innenraum und der Umgebung der Bauteilvorrichtung statt. Somit kann sich der Druck oder die Konzentration des im Innenraum vorhandenen Gases ändern. Die Druckänderung kann auf verschiedenste Arten erfolgen. Zum einen kann bei der Herstellung der Bauteilvorrichtung ein bestimmter Über- oder Unterdruck im Innenraum vorgesehen sein, welcher sich durch ein Leck hervorgerufen durch einen Schaden in der Verbindung ändern kann.

Alternativ kann sich der Druck oder die Konzentration des Gases im Innenraum dadurch ändern, dass sich der Druck oder die Konzentration des Gases in der Umgebung der Bauteilvorrichtung ändert. Dies kann beispielsweise dann auftreten, wenn die Bauteilvorrichtung in einem Luftfahrzeug vorgesehen ist, so dass während des Fluges sich der Druck oder die Gaskonzentration in dem Luftfahrzeug ändert. Bei intakter Verklebung übertragen sich die Druck- oder Konzentrationsänderungen nicht auf den Innenraum. Folglich werden im Innenraum vorzugsweise ein relativ konstanter Druck und eine sich kaum ändernde Gaskonzentration gemessen. Eine Änderung des Druckes und/oder der Gaskonzentration, insbesondere um einen gewissen Schwellenwert, deutet auf einen Schaden in der Verklebung hin.

Der Gradient der Druckänderung und/oder der Konzentrationsänderung im Innenraum und/oder im Außenraum kann verwendet werden, um zu bestimmen, dass eine Beschädigung an der Verklebung vorliegt. Denn eine Veränderung des Gradients der Druckänderung und/oder der Konzentrationsänderung deutet darauf hin, dass sich der Gasaustauch zwischen dem Innenraum und dem Außenraum verändert hat.

Das Vorsehen eines Grenzwertes für die Druckänderung oder die Konzentrationsänderung, ab welchem ein Alarm oder eine Benachrichtigung ausgegeben wird, kann beispielsweise dann sinnvoll sein, wenn sich der Druck im Innenraum aufgrund von Temperaturschwankungen ändern kann. Auf diese Weise lassen sich Fehler in der Schadensbestimmung vermeiden.

Die von der Innenraumsensoreinrichtung bestimmten Druck- oder Konzentrationswerte werden vorzugsweise von der Steuerungseinrichtung überwacht. Wird eine auf einen Schaden in der Verklebung hindeutende Änderung festgestellt, kann die Steuerungseinrichtung ein Alarmsignal oder eine Benachrichtigung produzieren.

Es ist bevorzugt, dass die Detektoreinrichtung eine Außenraumsensoreinrichtung umfasst, welche ausgebildet ist, die Änderung des Drucks und/oder der Konzentration eines die Außenraumsensoreinrichtung umgebenden Gases zu messen, wobei die Außenraumsensoreinrichtung außerhalb des Innenraums angeordnet ist.

Die Außenraumsensoreinrichtung kann an dem ersten Bauteilelement oder dem zweiten Bauteilelement angeordnet sein. Allerdings ist es auch möglich, die Außenraumsensoreinrichtung benachbart zu dem ersten Bauteilelement und dem zweiten Bauteilelement anzuordnen, beispielsweise an einer Wand eines Raumes des Luftfahrzeugs, in dem das erste Bauteilelement und das zweite Bauteilelement vorgesehen sind.

Die Außenraumsensoreinrichtung kann analog der Innenraumsensoreinrichtung ausgebildet sein. Insbesondere kann die Außenraumsensoreinrichtung einen Gassensor zur Detektion der Konzentration eines Gases in der Umgebung des ersten und zweiten Bauteilelements aufweisen und/oder einen Drucksensor zur Bestimmung des Druckes des Gases in der Umgebung des ersten Bauteilelements und des zweiten Bauteilelements. Die Außenraumsensoreinrichtung kann ebenfalls mit der Steuerungseinrichtung verbunden sein.

Mit Hilfe der Außenraumsensoreinrichtung und der Innenraumsensoreinrichtung ist es möglich, den Verlauf des Druckes und/oder der Konzentration des Gases im Innenraum und außerhalb des Innenraums zu beobachten. Korreliert der Verlauf des Druckes und/oder der Konzentration in dem Innenraum mit dem außerhalb des Innenraums, deutet dies darauf hin, dass eine Gasverbindung zwischen dem Innenraum und dem Außenraum besteht. Die Gasverbindung wiederum deutet darauf hin, dass ein Schaden in der Verklebung vorliegt.

Das Vorsehen der Außenraumsensoreinrichtung und der damit möglichen Bestimmung der Korrelation der Drücke und der Konzentration des Gases ermöglicht es, Schwankungen im Druck im Innenraum, welche durch Temperaturschwankungen oder ähnliches hervorgerufen werden, oder Konzentrationsschwankungen, welche durch Absorption oder Emission von Gasen im Innenraum erfolgen können, zu vernachlässigen. Somit können falsch positive Benachrichtigungen oder Alarme hinsichtlich eines Schadens an der Verklebung reduziert werden.

Es ist bevorzugt, dass die Innenraumsensoreinrichtung einen ersten Innenraumsensor, welcher ausgebildet ist, den absoluten Druck der den Innenraumsensor umgebenden Gase zu messen, und/oder einen zweiten Innenraumsensor, welcher ausgebildet ist, den Partialdruck eines den Innenraumsensor umgebenden Gases zu messen, und/oder einen dritten Innenraumsensor, welcher ausgebildet ist, die Konzentration eines den dritten Innenraumsensor umgebenden Gases zu messen, umfasst, wobei vorzugsweise mehrere erste Innenraumsensoren und/oder mehrere zweite Innenraumsensoren und/oder mehrere dritte Innenraumsensoren im Innenraum vorgesehen sind.

Der erste Innenraumsensor ist insbesondere ausgebildet, den Gesamtdruck aller verschiedenen Gase, welche im Innenraum vorliegen, zu messen. Der erste Innenraumsensor kann wie ein aus dem Stand der Technik bekannter Drucksensor oder Barometer ausgebildet sein. Der absolute Druck des das erste und das zweite Bauteilelement umgebenden Gases unterscheidet sich in der Regel auf Bodenhöhe und auf Flughöhe. Somit deutet die Änderung des absoluten Druckes im Innenraum darauf hin, dass eine Gasverbindung zwischen Innenraum und Außenraum besteht, was, wie zuvor ausgeführt, ein Hinweis auf einen Schaden in der Verklebung ist.

Der zweite Innenraumsensor ist insbesondere ausgebildet, den Partialdruck eines in dem Innenraum vorliegenden Gases zu messen. Sensoren zur Bestimmung des Partialdrucks von Gasen sind aus dem Stand der Technik bekannt. Beispielsweise kann der zweite Innenraumsensor den Partialdruck von Sauerstoff, Ozon oder Wasserdampf bestimmen. Diese Gase werden bevorzugt mittels des zweiten Innenraumsensors bestimmt, da sich deren Partialdrücke auf Bodenhöhe und Flughöhe des Luftfahrzeuges unterscheiden, so dass bei einem Schaden in der Verklebung zu erwarten ist, dass sich die Partialdrücke dieser Gase im Innenraum ändern.

Der dritte Innenraumsensor kann insbesondere die Konzentration von Wasserdampf, Sauerstoff oder Ozon bestimmen. Wie zuvor ausgeführt, ändert sich die Konzentration dieser Gase auf Flughöhe im Vergleich zur Bodenhöhe des Luftfahrzeugs. Der dritte Innenraumsensor basiert zum Beispiel auf einem halbleitenden Metalloxid.

Es ist bevorzugt, dass der Außenraumsensor einen ersten Außenraumsensor, welcher ausgebildet ist, den absoluten Druck der den Außenraumsensor umgebenden Gase zu messen, und/oder einen zweiten Außenraumsensor, welcher ausgebildet ist, den Partialdruck eines den zweiten Außenraumsensor umgebenden Gases zu messen, und/oder einen dritten Außenraumsensor, welcher ausgebildet ist, die Konzentration eines den dritten Außenraumsensor umgebenden Gases zu messen, umfasst, wobei vorzugsweise mehrere erste Außenraumsensoren und/oder mehrere zweite Außenraumsensoren und/oder mehrere dritte Außenraumsensoren vorgesehen sind.

Der erste Außenraumsensor ist insbesondere gleich wie der erste Innenraumsensor ausgebildet, der zweite Außenraumsensor wie der zweite Innenraumsensor und/oder der dritte Außenraumsensor wie der dritte Innenraumsensor. Durch das Vorsehen einer der Innenraumsensoreinrichtung entsprechenden Außenraumsensoreinrichtung ist es möglich, die Korrelation des absoluten Druckes, des Partialdruckes und/oder der Konzentration eines Gases zu bestimmen, was, wie oben aufgeführt, falsch positive Alarme reduzieren kann.

Das Vorsehen mehrerer erster Innenraumsensoren, mehrerer erster Außenraumsensoren, mehrerer zweiter Innenraumsensoren, mehrerer zweiter Au-ßenraumsensoren, mehrerer dritter Innenraumsensoren und/oder mehrerer dritter Außenraumsensoren kann dazu verwendet werden, den Schaden in der Verklebung zu lokalisieren. Unterschiede in der gemessenen Konzentration und/oder der gemessenen Drücke deuten darauf hin, ob der Schaden näher oder ferner von den einzelnen Sensoren angeordnet ist. Diese Auswertung kann mit Hilfe der Steuereinrichtung erfolgen.

Gemäß der Erfindung umfasst die Innenraumsensoreinrichtung verschiedene zweiten Innenraumsensoren und/oder dritte Innenraumsensoren, welche jeweils ausgebildet sind, den Partialdruck und die Konzentration von unterschiedlichen Gasen zu messen. Das Vorsehen verschiedener zweiter Innenraumsensoren und/oder zweiter Außenraumsensoren, welche ausgebildet sind, die Partialdrücke von unterschiedlichen Gasen zu messen, und/oder das Vorsehen von verschiedener dritten Innenraumsensoren und/oder Außenraumsensoren, welche ausgebildet sind, die Konzentration von verschiedenen Gasen zu messen, hat den Vorteil, dass falsch negative Alarme reduziert werden können. Denn wenn der Partialdruck von verschiedenen Gasen und/oder die Konzentration von verschiedenen Gasen sich um einen bestimmten Wert ändert oder entsprechend dem Partialdruck oder der Konzentration in der Umgebung korreliert, deutet es darauf hin, dass ein Schaden in der Verklebung vorliegt. Die Änderung der Konzentration oder des Partialdruckes eines Gases kann auch anderweitig verursacht werden, so dass in diesem Fall ein Fehlalarm vorläge.

Alternativ oder zusätzlich können zweite und dritte Innenraumsensoren und/oder zweite und dritte Außenraumsensoren zur Minimierung von falsch negativen Alarmen vorgesehen werden, welche jeweils ausgebildet sind, die Konzentration oder den Partialdruck von unterschiedlichen Gasen zu messen. Beispielsweise ist der zweite Innenraumsensor ausgebildet, den Partialdruck von Sauerstoff zu messen, während der dritte Innenraumsensor ausgebildet ist, die Konzentration von Ozon zu messen.

Gemäß der Erfindung sind die zweiten Innenraumsensoren als beschichtete optische Faser ausgebildet.

Insbesondere verläuft die optische Faser entlang einer Längsrichtung des ersten Bauteilelements und/oder des zweiten Bauteilelements. Bevorzugt ist an dem ersten Bauteilelement und/oder einem zweiten Bauteilelement ein Schacht angebracht, in welchem die optische Faser geführt ist. Der Schacht steht mit dem Innenraum in Fluidverbindung, beispielsweise indem Öffnungen in dem Schacht vorgesehen sind. Das Vorsehen eines Schachtes ermöglicht es auf einfache Weise, die optische Faser einzuführen oder auszutauschen, nämlich durch ein Ein- oder Ausführen der optischen Faser in oder aus dem Schacht.

Die optische Faser kann mit einer entsprechenden Beschichtung oder mehreren Beschichtungen versehen sein, mittels welcher sich insbesondere der Partialdruck von Sauerstoff bestimmen lässt. Das Vorsehen einer optischen Faser für den zweiten Innenraumsensor hat den Vorteil, dass mit Hilfe der optischen Faser auch lokal der Partialdruck von Sauerstoff bestimmbar ist, was dazu verwendet werden kann, die Position des Schadens in der Verklebung zu bestimmen.

Es ist bevorzugt, dass die Bauteilvorrichtung mit einer Selbsttesteinrichtung versehen ist, welche vorzugsweise ausgebildet ist, die Innenraumsensoreinrichtung und/oder die Außenraumsensoreinrichtung zu erwärmen oder zu kühlen.

Die Selbsttesteinrichtung steht insbesondere in thermischem Kontakt mit der Innenraumsensoreinrichtung und/oder der Außenraumsensoreinrichtung. Insbesondere bei Gassensoren, welche die Konzentration eines Gases, wie beispielsweise Ozon oder Sauerstoff messen, ändert sich das Messergebnis je nach Temperatur des Gassensors. Das Erwärmen oder Abkühlen der Innenraumsensoreinrichtung und/oder der Außenraumsensoreinrichtung, insbesondere des dritten Innenraumsensors und/oder des dritten Außenraumsensors, kann dazu verwendet werden, eine gemessene Veränderung der Konzentration des Gases zu erzeugen. Wenn sich die gemessene Konzentration des Gases durch Erwärmen oder Kühlen ändert, ist es ein Hinweis darauf, dass die Innenraumsensoreinrichtung und/oder die Außenraumsensoreinrichtung funktionsfähig ist. Die Selbsttesteinrichtung kann beispielsweise als Peltier-Element oder Heizeinrichtung ausgeführt sein und steht insbesondere mit der Steuerungseinrichtung in Verbindung.

Es ist bevorzugt, dass die Bauteilvorrichtung mit einer Druckausgleichseinrichtung versehen ist, welche ausgebildet ist, Druckunterschiede zwischen dem Innenraum und der Umgebung der Bauteilvorrichtung auszugleichen, wobei vorzugsweise die Druckausgleichseinrichtung ein in dem Innenraum angeordnetes Gasreservoir und/oder ein Vorspannventil, welches den Innenraum mit der Umgebung der Bauteilvorrichtung verbindet, umfasst.

Durch Temperaturunterschiede oder durch starke Druckänderungen in der Umgebung der Bauteilvorrichtung, während des Flugs des Luftfahrzeugs auf Flughöhe kann ein sehr großer Druckunterschied zwischen dem Innenraum und der Umgebung der Bauteilvorrichtung erzeugt werden. Dies kann im Extremfall zu Beschädigungen an dem ersten Bauteilelement, dem zweiten Bauteilelement oder an der Verklebung führen.

Um dies zu verhindern, kann in dem Innenraum der Bauteilvorrichtung ein Gasreservoir vorgesehen sein, welches starke Druckänderungen, insbesondere über einen gewissen Schwellenwert, ausgleichen kann. Dazu ist das Gasreservoir beispielsweise mit einem Vorspannventil versehen, welches sich öffnet, wenn die Druckänderung im Innenraum den Schwellenwert übersteigt.

Alternativ kann ein Vorspannventil direkt in dem ersten Bauteilelement und/oder dem zweiten Bauteilelement vorgesehen sein, so dass, wenn der Druckunterschied zwischen dem Innenraum und dem Außenraum den Schwellenwert übersteigt, sich öffnet und somit für einen Druckausgleich sorgt.

Es ist bevorzugt, dass eine Membran an der Bauteilvorrichtung vorgesehen ist, welche ausgebildet ist, für Gase permeabel und für Wasserdampf impermeabel zu sein.

Vorzugsweise ist die Membran an einer oder beiden Stirnseiten des ersten Bauteilelements und des zweiten Bauteilelements vorgesehen. Die Membran kann Teil der oben erwähnten Verschlussvorrichtung sein und ist derart ausgebildet, dass Wasserdampf durch sie nicht hindurchdringen kann, während der Austausch von anderen Gasen durch die Membran möglich ist. Die Membran erlaubt es daher, einen Druckausgleich zwischen dem Innenraum und dem Außenraum herzustellen.

In Verbindung mit der Membran ist insbesondere der zweite Innenraumsensor oder der dritte Innenraumsensor vorgesehen, welche in dieser Ausführungsform ausgebildet sind, den Partialdruck des Wasserdampfs oder die Konzentration des Wasserdampfes zu bestimmen. Da zwischen dem Innenraum und dem Außenraum aufgrund er Membran kein Austausch von Wasserdampf möglich ist, deutet eine Änderung des Partialdrucks des Wasserdampfs oder die Konzentrationsänderung des Wasserdampfs im Innenraum darauf hin, dass ein Schaden an der Verklebung vorliegt.

Die Erfindung ist ferner auf ein Verfahren zum Detektieren eines Schadens einer Verklebung bei einer Bauteilvorrichtung, insbesondere für ein primäres Stützbauteil eines Luftfahrzeugs, gerichtet. Das Verfahren umfasst die Schritte: Bereitstellen der Bauteilvorrichtung, welche zwei durch die Verklebung verbundene Bauteilelemente und einen zu der Verklebung in Fluidverbindung stehenden Innenraum, welche wenigstens für eine Art von Gas hermetisch abgeschlossen ist, aufweist, Detektieren des Druckes und/oder der Konzentration des Gases im Innenraum und Bestimmen eines Schadens der Verklebung, wenn eine Änderung des Druckes und/oder der Konzentration über einen vorbestimmten Grenzwert festgestellt wird.

Das Verfahren kann beispielsweise mit Hilfe der Bauteilvorrichtung, so wie sie oben beschrieben wurde, durchgeführt werden. Darüber hinaus gelten die im Hinblick auf die Bauteilvorrichtung dargelegten bevorzugten Ausführungsformen, Varianten und Vorteile analog.

Das Verfahren kann außerdem den Schritt umfassen: Detektieren des Drucks und/oder der Konzentration des Gases außerhalb der Bauteilvorrichtung und Bestimmen eines Schadens der Verklebung, wenn der Verlauf des Drucks und/oder der Konzentration des Gases im Innenraum und außerhalb des Innenraums korreliert.

Es ist bevorzugt, dass das Verfahren ferner den Schritt umfasst: Detektieren des Drucks und/oder der Konzentration von verschiedenen Gasen im Innenraum und Bestimmen eines Schadens der Verklebung, wenn eine Änderung des Drücke über einen vorbestimmten Grenzwerten festgestellt wird.

Das Verfahren umfasst außerdem erfindungsgemäß den Schritt: Detektieren des Drucks und/oder der Konzentration des Gases im Innenraum an mehreren Positionen und Lokalisieren des Schadens der Verklebung durch Bestimmen der Druckunterschiede und/oder Konzentrationsunterschiede zwischen den einzelnen Positionen.

Es ist bevorzugt, dass das Verfahren ferner den Schritt umfasst: Überwachen des Verlaufs des Drucks und/oder der Konzentration in dem Innenraum über einen vorgegebenen Zeitraum und Bestimmen eines Schadens der Verklebung, wenn eine Abweichung des Druckverlaufs von einem vorherbestimmten Druckverlauf über einen vorgegebenen Grenzwert liegt.

Dieser Schritt eignet sich vor allem, wenn der Innenraum einen Gasaustausch zu einem gewissen Grade mit der Umgebung zulässt. In diesem Fall ergeben sind Druck- und Konzentrationsänderungen im Innenraum, beispielsweise im Verlauf eines Flugs des Luftfahrzeugs. Diese können aufgezeichnet werden; zum Beispiel abhängig von der Flughöhe. Diese Aufzeichnung kann dem vorbestimmten Druckverlauf entsprechen. Im Falle eines Schadens in der Verklebung verändert sich die Änderung des Drucks und/oder der Konzentration, beispielsweise erfolgt eine schnellere Anpassung der Druck- und/oder Konzentrationsunterschiede zwischen dem Außenraum und dem Innenraum, da der Schaden eine zusätzliche Gasverbindung bereitstellt. Diese Abweichung von dem vorbestimmten Verlauf kann als Hinweis auf einen Schaden betrachtet werden.

Die Erfindung betrifft ferner ein Verfahren zum Detektieren eines Schadens in einer Verklebung bei einer Bauteilvorrichtung, insbesondere für ein primäres Stützbauteil eines Luftfahrzeugs. Das Verfahren umfasst die Schritte: Bereitstellen der Bauteilvorrichtung, welche zwei durch die Verklebung verbundene Bauteilelemente und einen zu der Verklebung in Fluidverbindung stehenden Innenraum, welcher wenigstens für eine Art von Gas hermetisch abgeschlossen ist, aufweist, Pumpen dieses Gases in den Innenraum, Detektieren der Konzentration des Gases außerhalb der Bauvorrichtung und Bestimmen eines Schadens der Verklebung, wenn die Konzentration des Gases über einem vorbestimmten Schwellenwert liegt.

Hinsichtlich der Bauteilvorrichtung, an der das Verfahren durchgeführt wird, gelten die oben angestellten Überlegungen, bevorzugte Ausführungsformen und Vorteile.

Der Innenraum dieser Bauteilvorrichtung ist wenigstens für eine Art von Gas hermetisch von der Umgebung abgeschlossen. Diese Art von Gas wird nun in den Innenraum gepumpt, so dass sich dort der Druck dieses Gases erhöht. Im Anschluss daran oder gleichzeitig wird die Konzentration dieses Gases außerhalb der Bauteilvorrichtung, insbesondere mittels der oben beschriebenen Außenraumsensoreinrichtung, speziell des dritten Außenraumsensors, bestimmt. Steigt nun die Konzentration des Gases in der Umgebung der Bauteilvorrichtung über einen bestimmten Schwellenwert, deutet dies darauf hin, dass eine Fluidverbindung zwischen dem Innenraum und der Umgebung besteht, was wiederum auf einen Schaden in der Verklebung hinweist.

Das Gas kann beispielsweise an den Stirnseiten des ersten und zweiten Bauteilelements in den Innenraum eingeleitet werden. Alternativ kann in dem ersten Bauteilelement und/oder in dem zweiten Bauteilelement ein verschließbarer Zugang vorgesehen sein, mittels welchem das Gas in den Innenraum eingeführt werden kann.

"Pumpen" soll in diesem Zusammenhang so verstanden werden, dass das Gas mit Druck in den Innenraum eingeführt wird. Beispielsweise kann der Innenraum an einen unter Druck stehenden Gasbehälter angeschlossen werden. Insbesondere ist es möglich, Gas dem Innenraum kontinuierlich oder zeitlich beabstandet zuzuführen. Beispielsweise wird das Gas mit Druck in den Innenraum gepumpt und der Austritt des Gases aus dem Innenraum wird mittels der Außensensoreinrichtung überwacht. Sinkt der Druck des Gases im Innenraum unter einen Schwellenwert kann Gas automatisch oder manuell nachgepumpt werden. Dazu ist das erste Bauteilelement und/oder das zweite Bauteilelement bevorzugt mit einem Einfüllventil versehen.

Es ist bevorzugt, dass die Außenraumsensoreinrichtung einen Flüssigkeitsdetektor aufweist, welcher ausgebildet ist, die Konzentration von kondensiertes Gas zu detektieren.

Wenn die Bauteilvorrichtung in Räumen angeordnet ist, die sehr kalt sind oder deren Wände sehr kalt sind, besteht die Möglichkeit, dass das austretende Gas kondensiert. Dies trifft vor allem dann zu, wenn das austretende Gas einen Kondensationspunkt hat, der knapp oberhalb oder unterhalb der Temperatur des Raumes ist. Durch die Kondensation erhöht sich die Konzentration des Gases, so dass auch sehr geringe Konzentrationen des austretenden Gases in der Luft gemessen werden können. Dies trifft vor allem dann zu, wenn Gas nur in sehr geringem Maße freigesetzt wird, und die Kondensation des austretenden Gases zu einer zeitlichen Akkumulation der Konzentration des Gases führt.

Dieser Flüssigkeitsdetektor kann beispielsweise unter einer Auffangeinrichtung, wie beispielsweise einem Trichter, angeordnet sein, so dass möglichst viel kondensiertes Markergas zu dem Flüssigkeitsdetektor gelangt. Der Flüssigkeitsdetektor kann beispielsweise an einer kalten Wand oder an einer abgekühlten Stelle des ersten und/oder zweiten Bauteilelements vorgesehen sein.

In einer weiteren Ausführungsform kann der Flüssigkeitsdetektor in vorhandene Drainageelemente des Luftfahrzeugs integriert sein kann.

Erfindungsgemäß beinhaltet das Verfahren ferner den Schritt Bewegen der Außenraumsensoreinrichtung entlang der Bauteilvorrichtung und Bestimmen der Position des Schadens der Verklebung durch Überwachung der Konzentration des Gases.

Die Außenraumsensoreinrichtung, insbesondere der dritte Außenraumsensor, kann beispielsweise als tragbarer Sensor ausgebildet sein, der entlang des ersten und/oder zweiten Bauteilelements bewegt wird. Ein Anstieg der Konzentration des Gases bei dieser Bewegung deutet darauf hin, dass die Außenraumsensoreinrichtung auf den Schaden in der Verklebung hin bewegt wird. Fällt die Konzentration des Gases ab, deutet dies darauf hin, dass sich die Außenraumsensoreinrichtung von der Position des Schadens der Verklebung weg bewegt. Auf diese Art und Weise kann die Position des Schadens in der Verklebung bestimmt werden. Darüber hinaus kann die Größe der Konzentration des Gases nahe der Position des Schadens als ein Hinweis darauf gesehen werden, wieviel Gas aus dem Innenraum entweichen kann und somit auf die Größe des Schadens in der Verklebung. Bevorzugte Ausführungsformen der Erfindung werden nun anhand der beigefügten, schematischen und nicht maßstabsgerechten Zeichnungen erläutert. Darin zeigen:
- Fig. 1: einen Querschnitt durch eine erste Ausführungsform der Bauteilvorrichtung ohne Schaden in der Verklebung;
- Fig. 2: einen Querschnitt durch eine zweite Ausführungsform der Bauteilvorrichtung mit Schaden in der Verklebung; und
- Fig. 3: einen Querschnitt durch eine dritte Ausführungsform der Bauteilvorrichtung ohne Schaden in der Verklebung.

Die in den Figuren gezeigte Bauteilvorrichtung 10 umfasst ein erstes Bauteilelement 12, ein zweites Bauteilelement 14, eine Verklebung 16, eine Detektoreinrichtung 18, eine Selbsttesteinrichtung 20 und eine Druckausgleichseinrichtung 22.

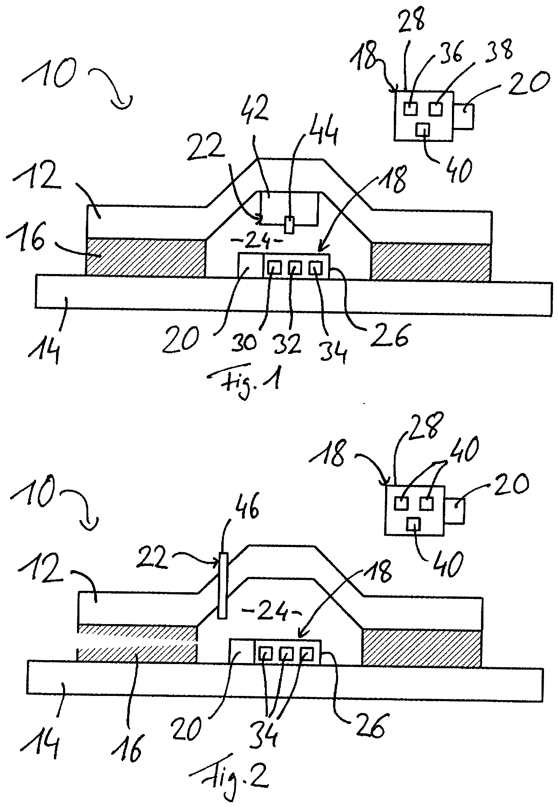

Das erste Bauteilelement 12 ist ein Omega-Stringer aus einem Composite-Werkstoff. Das zweite Bauteilelement 14 ist ein Teil einer Außenhaut eines Luftfahrzeugs und ebenfalls aus einem Composite-Werkstoff hergestellt. Das erste Bauteilelement 12 ist an dem zweiten Bauteilelement 14 adhäsiv durch die Verklebung 16 verbunden. Die Verklebung 16 ist in Fig. 1 bis 3 vergrößert dargestellt und ist auf Basis von Harz hergestellt.

Durch das erste Bauteilelement 12, das zweite Bauteilelement 14 und die Verklebung 16 wird ein Innenraum 24 hergestellt, dessen Stirnflächen verschlossen sind. Somit ist der Innenraum 24 von der Umgebung des ersten Bauteilelements 12 und des zweiten Bauteilelements 14 hermetisch oder gasdicht abgeschlossen, sofern die Verklebung 16 ohne Schaden ist.

Die Detektoreinrichtung 18 umfasst eine Innenraumsensoreinrichtung 26, welche in dem Innenraum 24 an dem zweiten Bauteilelement 14 - oder bei anderen nicht dargestellten Ausführungen an dem ersten Bauteilelement 12 - befestigt angeordnet ist, und eine Außenraumsensoreinrichtung 28. Die Innenraumeinrichtung 26 und die Außenraumeinrichtung 28 sind drahtlos mit einer Steuerungseinrichtung verbunden, welche in den Figuren nicht gezeigt ist. Die Steuerungseinrichtung ist das Computersystem des Luftfahrzeugs.

Die Innenraumsensoreinrichtung 26 weist einen ersten Innenraumsensor 30, einen zweiten Innenraumsensor 32 und einen dritten Innenraumsensor 34 auf. Die Innenraumsensoren 30, 32, 34 stehen jeweils mit dem in dem Innenraum 24 vorhandenen Gas in Fluidverbindung. Der erste Innenraumsensor 30 ist ausgebildet, den absoluten Druck des Gases in dem Innenraum 24 zu bestimmen. Der zweite Innenraumsensor 32 ist ausgebildet, den Partialdruck des Sauerstoffs in dem Innenraum 24 zu bestimmen, während der dritte Innenraumsensor 34 ausgebildet ist, die Konzentration von Ozon in dem Innenraum 24 zu bestimmen.

Die Außenraumsensoreinrichtung 28 ist an einer Wand eines Raums, in dem das erste Bauteilelement 12 und das zweite Bauteilelement 14 vorsehen ist, befestigt. Die Außenraumsensoreinrichtung 28 weist einen ersten Außenraumsensor 36, einen zweiten Außenraumsensor 38 und einen dritten Außenraumsensor 40 auf.

Der erste Außenraumsensor 36 ist ausgebildet, den absoluten Druck der Luft in der Umgebung des ersten Bauteilelements 12 und des zweiten Bauteilelements 14 zu messen. Der zweite Außenraumsensor 38 ist ausgebildet, den Partialdruck von Sauerstoff in der ihn umgebenden Luft zu bestimmen. Der dritte Außenraumsensor 40 ist ausgebildet, die Konzentration von Ozon der Umgebungsluft zu bestimmen.

Die Selbsttesteinrichtung 20 steht in thermischem Kontakt mit der Innenraumsensoreinrichtung 26 und der Außenraumsensoreinrichtung 28. Die Selbsttesteinrichtung 20 ist als Heizelement ausgebildet und kann die Innenraumsensoreinrichtung 26 und die Außenraumsensoreinrichtung 28 erwärmen. Ferner ist die Selbsttesteinrichtung 20 drahtlos mit der Steuerungseinrichtung verbunden, wobei diese die Selbsttesteinrichtung 20 ansteuern kann.

Die Druckausgleichseinrichtung 22 in der in Fig. 1 gezeigten Ausführungsform weist ein Gasreservoir 42 und ein Gasreservoirvorspannventil 44 auf. Das Gasreservoir 42 ist an dem ersten Bauteilelement 12 befestigt. In dem Gasreservoir 42 ist Gas mit höherem Druck verglichen mit dem Gasdruck im Innenraum 24 gespeichert. Sinkt der Druck im Innenraum 24 unter einen gewissen Schwellenwert, öffnet sich das Gasreservoirvorspannventil 44 und Gas aus dem Reservoir 42 kann in den Innenraum 24 entweichen. Auf diese Weise kann ein zu großer Druckunterschied zwischen dem Innenraum 24 und dem Außenraum vermieden werden.

Die Funktionsweise der Bauteilvorrichtung 10 wird nun im Folgenden beschrieben. Ist die Verklebung 16 intakt, so ist der Innenraum 24 von der Umgebung gasdicht oder hermetisch abgeschlossen. Die von dem ersten Innenraumsensor 30 und dem zweiten Innenraumsensor 32 gemessenen Drücke korrelieren daher nicht mit den von dem ersten Außenraumsensor 36 und dem zweiten Außenraumsensor 38 gemessenen Druckänderungen. Auch die von dem dritten Innenraumsensor 34 gemessene Konzentration von Ozon korreliert nicht mit der Veränderung der Ozonkonzentration, welche mit dem dritten Außenraumsensor 40 gemessen wird.

Im Falle eines Schadens an der Verklebung 16, beispielsweise einem Riss in der Verklebung 16, wie dies in Fig. 2 dargestellt ist, besteht eine Gasverbindung zwischen dem Innenraum 24 und der Umgebung. Somit wird nun eine Korrelation zwischen der Veränderung des Druckes und der Konzentration des Gases zwischen Innenraum 24 und Umgebung mit Hilfe der Innenraumsensoreinrichtung 26 und der Außenraumsensoreinrichtung 28 festgestellt. In diesem Falle gibt die Steuerungseinrichtung einen Hinweis auf das Vorliegen eines Schadens in der Verklebung 16 aus.

Dadurch dass durch den zweiten Innenraumsensor 32 und den dritten Innenraumsensor 34 verschiedene Gase bestimmt werden, lassen sich falsch negative Alarme reduzieren. Durch die Messung der Korrelation zwischen Innenraum 24 und Außenraum lassen sich falsch positive Alarme reduzieren.

Eine zweite Ausführungsform der Bauteilvorrichtung 10 ist in Fig. 2 dargestellt. Diese ist mit der Bauteilvorrichtung 10 aus Fig. 1 identisch, bis auf die im Folgenden beschriebenen Unterschiede.

Die Innenraumsensoreinrichtung 26 weist drei dritte Innenraumsensoren 34 auf, welche jeweils ausgebildet sind, die Konzentration von Sauerstoff, Ozon und Wasserdampf zu bestimmen. Auch die Außenraumsensoreinrichtung 28 weist drei dritte Außenraumsensoren 40 auf, welche jeweils ausgebildet sind, die Konzentration von Sauerstoff, Ozon und Wasserdampf zu bestimmen.

Darüber hinaus ist die Druckausgleichseinrichtung 22 in der in Fig. 2 gezeigten Ausführungsform durch ein Vorspannventil 46 realisiert. Das Vorspannventil 46 ist in dem ersten Bauteilelement 12 vorgesehen und stellt eine Verbindung zwischen dem Innenraum 24 und der Umgebung her, falls der Druckunterschied über einem gewissen Schwellenwert liegt. Auf diese Weise lassen sich große Druckunterschiede zwischen dem Innenraum 24 und der Umgebung verhindern, welche im Extremfall Beschädigungen an dem ersten Bauteilelement 12, dem zweiten Bauteilelement 14 oder der Verklebung 16 hervorrufen können.

Die Funktionsweise der Bauteilvorrichtung 10 gemäß der in Fig. 2 gezeigten Ausführungsform ist analog der Ausführungsform gemäß Fig. 1.

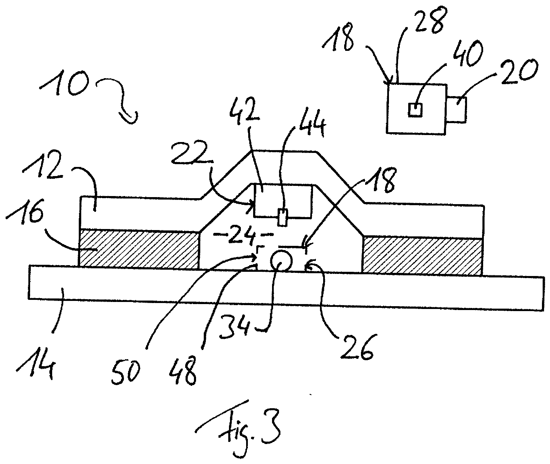

In Fig. 3 ist eine dritte Ausführungsform der Bauteilvorrichtung 10 dargestellt, welche mit der Bauteilvorrichtung 10 gemäß Fig. 1 identisch ist, bis auf den folgenden Unterschied. Die Innenraumsensoreinrichtung 26 weist einen dritten Innenraumsensor 34 auf, welcher als optische Faser mit einer Beschichtung ausgeführt ist. Die optische Faser dient zur Bestimmung der Ozonkonzentration in dem Innenraum 24. Die optische Faser wird in einem Schacht 48 geführt, der an einem zweiten Bauteilelement 14 befestigt ist. In dem Schacht 48 sind Öffnungen 50 vorgesehen, welche eine Verbindung zwischen dem Inneren des Schachtes 48 und dem Innenraum 24 herstellen, so dass sich Konzentrationsänderungen des Ozons im Innenraum 24 mit Hilfe der optischen Faser bestimmen lassen.

Die Außenraumsensoreinrichtung 28 weist in der in Fig. 3 gezeigten Ausführungsform nur einen dritten Außenraumsensor 40 auf, welcher ausgebildet ist, die Konzentration von Ozon zu bestimmen.

Die Funktionsweise der in Fig. 3 gezeigten Ausführungsform ist ähnlich der Funktionsweise der in Fig. 1 und 2 gezeigten Ausführungsform.

In einer weiteren Variante kann ein Schaden in der Verklebung 16 dadurch bestimmt werden, dass in den Innenraum 24 Gas gepumpt wird und mit Hilfe des dritten Außenraumsensors 40 die Änderung der Konzentration dieses Gases in der Umgebung detektiert wird. Ändert sich die Konzentration des Gases im Außenraum, deutet dies auf einen Schaden in der Verklebung 16 hin.

### Bezugszeichenliste:

- 10: Bauteilvorrichtung
- 12: erstes Bauteilelement
- 14: zweites Bauteilelement
- 16: Verklebung
- 18: Detektoreinrichtung
- 20: Selbsttesteinrichtung
- 22: Druckausgleichseinrichtung
- 24: Innenraum
- 26: Innenraumsensoreinrichtung
- 28: Außenraumsensoreinrichtung
- 30: erster Innenraumsensor
- 32: zweiter Innenraumsensor
- 34: dritter Innenraumsensor
- 36: erster Außenraumsensor
- 38: zweiter Außenraumsensor
- 40: dritter Außenraumsensor
- 42: Gasreservoir
- 44: Gasreservoirvorspannventil
- 46: Vorspannventil
- 48: Schacht
- 50: Öffnung

## Patentansprüche

1. Bauteilvorrichtung, insbesondere für ein primäres Stützbauteil eines Luftfahrzeugs, umfassend
ein erstes Bauteilelement (12),
ein zweites Bauteilelement (14),
eine Verklebung (16), welche eine Verbindung zwischen dem ersten Bauteilelement (12) und dem zweiten Bauteilelement (14) bereitstellt,
eine Detektoreinrichtung (18) mit wenigstens einer Innenraumsensoreinrichtung (26), welche ausgebildet ist, eine Änderung eines Drucks und/oder einer Konzentration eines die Innenraumsensoreinrichtung (26) umgebenden Gases zu messen,
wobei das erste Bauteilelement (12), das zweite Bauteilelement (14) und die Verklebung (16) einen Innenraum (24) begrenzen, und
wobei die Innenraumsensoreinrichtung (26) in dem Innenraum (24) angeordnet ist,
**dadurch gekennzeichnet, dass** die Innenraumsensoreinrichtung (26) verschiedene zweite Innenraumsensoren (32) umfasst, welche ausgebildet sind, den Partialdruck von unterschiedlichen Gasen zu messen, und/oder verschiedene dritte Innenraumsensoren (34) umfasst, welche ausgebildet sind, die Konzentration von unterschiedlichen Gasen zu messen,
wobei die zweiten Innenraumsensoren (32) als beschichtete optische Faser ausgebildet sind.

2. Bauteilvorrichtung nach Anspruch 1, **dadurch gekennzeichnet, dass** die Detektoreinrichtung (18) eine Außenraumsensoreinrichtung (28), welche ausgebildet ist, die Änderung des Drucks und/oder der Konzentration eines die Außenraumsensoreinrichtung (28) umgebenden Gases zu messen, umfasst, wobei die Außenraumsensoreinrichtung (28) außerhalb des Innenraums (24) angeordnet ist.

3. Bauteilvorrichtung nach Anspruch 1 oder 2, **dadurch gekennzeichnet, dass** die Innenraumsensoreinrichtung (26) einen ersten Innenraumsensor (30), welcher ausgebildet ist, den absoluten Druck der den ersten Innenraumsensor (30) umgebenden Gase zu messen, einen zweiten Innenraumsensor (32), welcher ausgebildet ist, den Partialdruck eines den zweiten Innenraumsensor (32) umgebenden Gases zu messen, und/oder einen dritten Innenraumsensor (34), welcher ausgebildet ist, die Konzentration eines den dritten Innenraumsensor (34) umgebenden Gases zu messen, umfasst, wobei vorzugsweise mehrere erste Innenraumsensoren (30) und/oder mehrere zweite Innenraumsensoren (32) und/oder mehrere dritten Innenraumsensoren (34) vorgesehen sind.

4. Bauteilvorrichtung nach einem der voranstehenden Ansprüche, **gekennzeichnet durch** eine Selbsttesteinrichtung (20), welche ausgebildet ist, die Innenraumsensoreinrichtung (26) und/oder die Außenraumsensoreinrichtung (28) zu erwärmen oder zu kühlen.

5. Bauteilvorrichtung nach einem der voranstehenden Ansprüche, **gekennzeichnet durch** Druckausgleichseinrichtung (22), welche ausgebildet ist, Druckunterschiede zwischen dem Innenraum (24) und der Umgebung der Bauteilvorrichtung (10) auszugleichen, wobei vorzugsweise die Druckausgleichseinrichtung (22) ein in dem Innenraum (24) angeordnetes Gasreservoir (42) und/oder ein Vorspannventil (46), welches den Innenraum (24) mit der Umgebung der Bauteilvorrichtung (10) verbindet, umfasst.

6. Bauteilvorrichtung nach einem der voranstehenden Ansprüche, **dadurch gekennzeichnet, dass** eine Membran an der Bauteilvorrichtung (10) vorgesehen ist, welche ausgebildet ist, für Gase permeabel und für Wasserdampf impermeabel zu sein.

7. Verfahren zum Detektieren eines Schadens einer Verklebung (16) bei einer Bauteilvorrichtung (10), insbesondere für ein primäres Stützbauteil eines Luftfahrzeugs, umfassend die Schritte:
Bereitstellen der Bauteilvorrichtung (10), welche zwei durch die Verklebung (16) verbundene Bauteilelemente (12, 14) und einen zu der Verklebung (16) in Fluidverbindung stehenden Innenraum (24), welcher wenigstens für eine Art von Gas hermetisch abgeschlossen ist, aufweist,
Detektieren des Drucks und/oder der Konzentration des Gases im Innenraum (24),
Bestimmen eines Schadens der Verklebung (16), wenn eine Änderung des Drucks und/oder der Konzentration über einen vorbestimmten Grenzwert festgestellt wird,
**gekennzeichnet durch** Detektieren des Drucks und/oder der Konzentration des Gases im Innenraum (24) an mehreren Positionen und Lokalisieren des Schadens der Verklebung (16) durch Bestimmen der Druckunterschiede und/oder Konzentrationsunterschiede zwischen den einzelnen Positionen.

8. Verfahren nach Anspruch 7, **gekennzeichnet durch** ferner Detektieren des Drucks und/oder der Konzentration des Gases außerhalb der Bauteilvorrichtung (10) und Bestimmen eines Schadens der Verklebung (16), wenn der Verlauf des Drucks und/oder der Konzentration des Gases im Innenraum (24) und außerhalb des Innenraums (24) korreliert.

9. Verfahren nach Anspruch 7 oder 8, **gekennzeichnet durch** Detektieren des Drucks und/oder der Konzentration von verschiedenen Gasen im Innenraum (24) und Bestimmen eines Schadens der Verklebung (16), wenn eine Änderung der Drücke über einen vorbestimmten Grenzwert festgestellt wird.

10. Verfahren nach einem der Ansprüche 7 bis 9, **gekennzeichnet durch** Überwachen des Verlaufs des Drucks und/oder der Konzentration in dem Innenraum (24) über einen vorgegebenen Zeitraum und Bestimmen eines Schadens der Verklebung (16), wenn eine Abweichung des Druckverlaufs von einem vorherbestimmten Druckverlauf über einen vorgegebenen Grenzwert liegt.

11. Verfahren zum Detektieren eines Schadens in einer Verklebung (16) bei einer Bauteilvorrichtung (10), insbesondere für ein primäres Stützbauteil eines Luftfahrzeugs, umfassend die Schritte:
Bereitstellen der Bauteilvorrichtung (10), welche zwei durch die Verklebung (16) verbundene Bauteilelemente (12, 14) und einen zu der Verklebung (16) in Fluidverbindung stehenden Innenraum (24), welcher wenigstens für eine Art von Gas hermetisch abgeschlossen ist, aufweist,
Pumpen dieses Gases in den Innenraum (24),
Detektieren der Konzentration des Gases außerhalb der Bauteilvorrichtung (10) mittels einer Außenraumsensoreinrichtung (28),
Bewegen der Außenraumsensoreinrichtung (28) entlang der Bauteilvorrichtung (10) und Bestimmen der Position des Schadens der Verklebung (16) durch Überwachung der Konzentration des Gases, und
Bestimmen eines Schadens der Verklebung (16), wenn die Konzentration des Gases über einen vorbestimmten Schwellenwert liegt.

## Claims

1. Component device, in particular for a primary structural component of an aircraft, comprising
- a first component element (12);
- a second component element (14);
- an adhesive bond (16) which provides a connection between the first component element (12) and the second component element (14);
- a detector installation (18) having at least one interior sensor installation (26) which is configured for measuring a variation in a pressure and/or a concentration of a gas surrounding the interior sensor installation (26) ;
- wherein the first component element (12), the second component element (14), and the adhesive bond (16) delimit an interior (24); and
- wherein the interior sensor installation (26) is disposed in the interior (24),
**characterized in that**
the interior sensor installation (26) comprises dissimilar second interior sensors (32) which are configured for measuring the partial pressure of dissimilar gases, and/or comprises dissimilar third interior sensors (34) which are configured for measuring the concentration of dissimilar gases, wherein the second interior sensors (32) are configured as coated optical fibres.

2. Component device according to Claim 1, **characterized in that** the detector installation (18) comprises an exterior sensor installation (28) which is configured for measuring the variation in the pressure and/or the concentration of a gas surrounding the exterior sensor installation (28), wherein the exterior sensor installation (28) is disposed outside the interior (24).

3. Component device according to Claim 1 or 2, **characterized in that** the interior sensor installation (26) comprises a first interior sensor (30) which is configured for measuring the absolute pressure of the gases surrounding the first interior sensor (30), a second interior sensor (32) which is configured for measuring the partial pressure of a gas surrounding the second interior sensor (32), and/or a third interior sensor (34) which is configured for measuring the concentration of a gas surrounding the third interior sensor (34), wherein a plurality of first interior sensors (30) and/or a plurality of second interior sensors (32) and/or a plurality of third interior sensors (34) are preferably provided.

4. Component device according to one of the preceding claims, **characterized by** a self-test installation (20) which is configured for heating or cooling the interior sensor installation (26) and/or the exterior sensor installation (28).

5. Component device according to one of the preceding claims, **characterized by** a pressure equalization installation (22) which is configured for equalizing pressure differentials between the interior (24) and the environment of the component device (10), wherein the pressure equalization installation (22) preferably comprises a gas reservoir (42) which is arranged in the interior (24) and/or a precharging valve (46) which connect/connects the interior (24) to the environment of the component device (10).

6. Component device according to one of the preceding claims, **characterized in that** a membrane is provided on the component device (10), said membrane being configured so as to be permeable to gases and impermeable to water vapour.

7. Method for detecting any damage to an adhesive bond (16) in a component device (10), in particular for a primary structural component of an aircraft, said method comprising the steps:
- providing the component device (10) which has two component elements (12, 14) connected by the adhesive bond (16), and an interior (24) which is fluidically connected to the adhesive bond (16) and which is hermetically sealed in terms of at least one type of gas;
- detecting the pressure and/or the concentration of the gas in the interior (24);
- determining any damage to the adhesive bond (16) when a variation in the pressure and/or the concentration beyond a predetermined limit value is established;
**characterized by** detecting the pressure and/or the concentration of the gas in the interior (24) at a plurality of positions, and localizing the damage to the adhesive bond (16) by determining the pressure differentials and/or concentration differentials between the individual positions.

8. Method according to Claim 7, **characterized by** furthermore detecting the pressure and/or the concentration of the gas outside the component device (10) and determining any damage to the adhesive bond (16) when the profile of the pressure and/or the concentration of the gas in the interior (24) and outside the interior (24) correlate.

9. Method according to Claim 7 or 8, **characterized by** detecting the pressure and/or the concentration of dissimilar gases in the interior (24) and determining any damage to the adhesive bond (16) when a variation in the pressures beyond a predetermined limit value is established.

10. Method according to one of Claims 7 to 9, **characterized by** monitoring the profile of the pressure and/or the concentration in the interior (24) over a predefined temporal period, and determining any damage to the adhesive bond (16) when a deviation of the pressure profile from a predetermined pressure profile is beyond a predefined limit value.

11. Method for detecting any damage to an adhesive bond (16) in a component device (10), in particular for a primary structural component of an aircraft, said method comprising the steps:
- providing the component device (10) which has two component elements (12, 14) connected by the adhesive bond (16), and an interior (24) which is fluidically connected to the adhesive bond (16) and which is hermetically sealed in terms of at least one type of gas;
- pumping said gas into the interior (24);
- detecting the concentration of the gas outside the component device (10) by means of an exterior sensor installation (28);
- moving the exterior sensor installation (28) along the component device (10) and determining the position of the damage to the adhesive bond (16) by monitoring the concentration of the gas; and
- determining any damage to the adhesive bond (16) when the concentration of the gas is beyond a predetermined threshold value.

## Revendications

1. Dispositif de composant, en particulier pour un composant de support primaire d'un aéronef, comportant un premier élément de composant (12),
un deuxième élément de composant (14),
un collage (16), lequel produit une liaison entre le premier élément de composant (12) et le deuxième élément de composant (14),
un dispositif de détection (18) doté d'au moins un dispositif de capteur d'espace intérieur (26), lequel est conçu pour mesurer un changement d'une pression et/ou d'une concentration d'un gaz entourant le dispositif de capteur d'espace intérieur (26),
dans lequel le premier élément de composant (12), le deuxième élément de composant (14) et le collage (16) délimitent un espace intérieur (24) et
dans lequel le dispositif de capteur d'espace intérieur (26) est disposé dans l'espace intérieur (24),
**caractérisé en ce que** le dispositif de capteur d'espace intérieur (26) comporte différents deuxièmes capteurs d'espace intérieur (32), lesquels sont conçus pour mesurer la pression partielle de différents gaz, et/ou comporte différents troisièmes capteurs d'espace intérieur (34), lesquels sont conçus pour mesurer la concentration de différents gaz, les deuxièmes capteurs d'espace intérieur (32) étant réalisés en tant que fibres optiques revêtues.

2. Dispositif de composant selon la revendication 1, **caractérisé en ce que** le dispositif de détection (18) comporte un dispositif de capteur d'espace extérieur (28), lequel est conçu pour mesurer le changement de la pression et/ou de la concentration d'un gaz entourant le dispositif de capteur d'espace extérieur (28), le dispositif de capteur d'espace extérieur (28) étant disposé à l'extérieur de l'espace intérieur (24).

3. Dispositif de composant selon la revendication 1 ou 2, **caractérisé en ce que** le dispositif de capteur d'espace intérieur (26) comporte un premier capteur d'espace intérieur (30), lequel est conçu pour mesurer la pression absolue des gaz entourant le premier capteur d'espace intérieur (30), un deuxième capteur d'espace intérieur (32), lequel est conçu pour mesurer la pression partielle d'un gaz entourant le deuxième capteur d'espace intérieur (32), et/ou un troisième capteur d'espace intérieur (34), lequel est conçu pour mesurer la concentration d'un gaz entourant le troisième capteur d'espace intérieur (34), de préférences plusieurs premiers capteurs d'espace intérieur (30) et/ou plusieurs deuxièmes capteurs d'espace intérieur (32) et/ou plusieurs troisièmes capteurs d'espace intérieur (34) étant prévus.

4. Dispositif de composant selon l'une des revendications précédentes, **caractérisé par** un dispositif d'autocontrôle (20), lequel est conçu pour réchauffer ou pour refroidir le dispositif de capteur d'espace intérieur (26) et/ou le dispositif de capteur d'espace extérieur (28).

5. Dispositif de composant selon l'une des revendications précédentes, **caractérisé par** un dispositif de compensation de pression (22), lequel est conçu pour compenser des différences de pression entre l'espace intérieur (24) et l'environnement du dispositif de composant (10), le dispositif de compensation de pression (22) comportant de préférence un réservoir de gaz (42) disposé dans l'espace intérieur (24) et/ou une soupape de précharge (46), laquelle relie l'espace intérieur (24) à l'environnement du dispositif de composant (10).

6. Dispositif de composant selon l'une des revendications précédentes, **caractérisé en ce qu'**une membrane est prévue au niveau du dispositif de composant (10), laquelle est conçue pour être perméable aux gaz et imperméable à la vapeur d'eau.

7. Procédé de détection d'un endommagement d'un collage (16) dans un dispositif de composant (10), en particulier pour un composant de support primaire d'un aéronef, comportant les étapes suivantes :
fourniture du dispositif de composant (10), lequel comprend deux éléments de composant (12, 14) reliés par le biais du collage (16) et un espace intérieur (24) en liaison fluidique par rapport au collage (16), lequel espace intérieur est fermé hermétiquement au moins pour un type de gaz,
détection de la pression et/ou de la concentration du gaz dans l'espace intérieur (24),
détermination d'un endommagement du collage (16) lorsqu'un changement de la pression et/ou de la concentration au-delà d'une valeur limite prédéfinie est déterminé,
**caractérisé par** la détection de la pression et/ou de la concentration du gaz dans l'espace intérieur (24) en plusieurs positions et localisation de l'endommagement du collage (16) par détermination des différences de pression et/ou des différences de concentration entre les positions individuelles.

8. Procédé selon la revendication 7, **caractérisé en outre par** la détection de la pression et/ou de la concentration du gaz à l'extérieur du dispositif de composant (10) et la détermination d'un endommagement du collage (16) lorsque la variation de la pression et/ou de la concentration du gaz dans l'espace intérieur (24) et à l'extérieur de l'espace intérieur (24) sont en corrélation.

9. Procédé selon la revendication 7 ou 8, **caractérisé par** la détection de la pression et/ou de la concentration de différents gaz dans l'espace intérieur (24) et la détermination d'un endommagement du collage (16) lorsqu'un changement des pressions au-delà d'une valeur limite prédéfinie est déterminé.

10. Procédé selon l'une des revendications 7 à 9, **caractérisé par** la surveillance de la variation de la pression et/ou de la concentration dans l'espace intérieur (24) pendant une période prédéfinie et la détermination d'un endommagement du collage (16) lorsqu'un écart de la variation de pression par rapport à une variation de pression prédéterminée dépasse une valeur limite prédéfinie.

11. Procédé de détection d'un endommagement dans un collage (16) dans un dispositif de composant (10), en particulier pour un composant de support primaire d'un aéronef, comportant les étapes suivantes :
fourniture du dispositif de composant (10), lequel comprend deux éléments de composant (12, 14) reliés par le biais du collage (16) et un espace intérieur (24) en liaison fluidique par rapport au collage (16), lequel espace intérieur est fermé hermétiquement au moins pour un type de gaz,
pompage de ce gaz dans l'espace intérieur (24),
détection de la concentration du gaz à l'extérieur du dispositif de composant (10) au moyen d'un dispositif de capteur d'espace extérieur (28),
déplacement du dispositif de capteur d'espace extérieur (28) le long du dispositif de composant (10) et détermination de la position de l'endommagement du collage (16) par surveillance de la concentration du gaz, et
détermination d'un endommagement du collage (16) lorsque la concentration du gaz est supérieure à une valeur seuil prédéfinie.
